# EUROPÄISCHE PATENTSCHRIFT

(11) **EP 1 953 042 B1**
(45) Veröffentlichungstag und Bekanntmachung des Hinweises auf die Patenterteilung: **09.12.2009**
(21) Anmeldenummer: 08000327.0
(22) Anmeldetag: 10.01.2008
(51) Int. Cl.: B60R 9/04

(54) **Dachreling für Fahrzeuge**
Roof rack for vehicles
Galerie de toit pour véhicules

(30) Priorität: 31.01.2007 DE 102007005653
(43) Veröffentlichungstag der Anmeldung: 06.08.2008
(73) Patentinhaber: JAC Products Deutschland GmbH, 42285 Wuppertal (DE)
(72) Erfinder: Rothstein, Reinhold, 42279 Wuppertal (DE); Steffens, Reiner, 45549 Sprockhövel (DE); Lumpe, Karl-Heinz, 45549 Sprockhövel (DE); Kolodziej, Klaus, 42329 Wuppertal (DE); Höhne, Klaus, 42399 Wuppertal (DE)
(74) Vertreter: Christophersen & Partner

(56) Entgegenhaltungen:
- EP-A- 0 631 904
- EP-A- 1 348 597
- WO-A-03/033305
- DE-A1- 3 539 449
- DE-A1- 19 542 341
- DE-A1- 19 617 305
- DE-C1- 19 948 476
- US-B1- 7 204 396

## Beschreibung

Die Erfindung betrifft eine Dachreling für Fahrzeuge aus zwei sich in einem Abstand und im Wesentlichen parallel zur Dachfläche längs der seitlichen Dachrahmen erstreckenden, als Hohlprofile ausgebildeten Längsholmen und aus die Längsholme tragenden, sich jeweils auf dem Dach oder darin ausgebildeten Kanälen abstützenden Stützfüßen, die jeweils einen in die Enden eines Längsholms einsteckbaren Zapfen und einen am Dachblech ausschraubbaren Träger aufweisen, wobei der Träger als Blechpressprofil ausgebildet und mit dem Zapfen lösbar verbunden ist, das Blechpressprofil eine Anschraubfläche, davon im Bogen ansteigend eine Übergangsfläche und an einer Längsseite eine nach oben abgewinkelte Versteifungs- und Stützrippe aufweist, und der Zapfen an seinem einen Ende mit einem Einsteckschlitz für das Ende der Übergangsfläche versehen und sein anderes Ende für das Aufschieben.des entsprechenden Endes des Längsholms ausgebildet ist.

Eine Dachreling für Fahrzeuge mit diesen Merkmale ist aus der DE 196 17 305 A1 bekannt. Zur Befestigung der Längsholme der Dachreling dienen Stützfüße mit einem auf dem Dach verschraubbaren Träger, an dem ein in das jeweilige Ende des Längsholms einsteckbarer Zapfen angeordnet ist. Der Stützfuß ist als Blechpressprofil ausgebildet mit einer Anschraubfläche, davon im Bogen ansteigend einer Übergangsfläche und einer Versteifungs- und Stützrippe. Die Dachreling nach der DE 196 17 305 A1 zeigt insgesamt kein einheitliches Aussehen sofern, was in der Praxis der Fall sein wird, der als Blechpressprofil ausgebildete Stützfuß aus einem anderen Material besteht, als der daran befestigbare Dachholm. Zwar wird durch eine von oben aufsetzbare Kappe eine Materialeinheitlichkeit mit dem Längsholm erzielt, jedoch zeigt die im Bogen ansteigende Übergangsfläche des Blechpressprofils ein abweichendes Aussehen, was vom Betrachter als optisch nicht optimal empfunden wird.

Bei einer in der DE 40 04 829 C2 beschriebenen Dachreling sind die Stützfüße im Wesentlichen massiv aus Metall oder Kunststoff gefertigt und mit den als Hohlprofile ausgebildeten Längsholmen mittels in die Enden jeweils eines Längsholms einsteckbaren Zapfen, die einstückig mit den Stützfüßen geformt sind, verbunden. Es liegt auf der Hand, dass diese Stützfüße ein verhältnismäßig hohes Gewicht aufweisen, was im Gegensatz zum Bestreben steht, das Gewicht der Dachreling so gering wie möglich zu halten, um die Lage des Fahrzeugschwerpunktes möglichst wenig zu beeinflussen.

Neben dem Gebrauchsnutzen einer Dachreling spielt deren Stilistik eine bedeutende Rolle. Das Styling des Fahrzeugs und dessen Anbauteile sollen optisch wie aus einem Guss wirken. Durch entsprechende, dekorative Oberflächenbehandlung kann die Dachreling ein höherwertiges Aussehen erhalten. Diesem Bestreben stehen oftmals Einschränkungen bei der Herstellbarkeit, beim Gewicht und den nicht zuletzt daraus resultierenden Kosten für das Produkt entgegen.

Zwar lässt sich durch den Einsatz von Kunststoffen für die Stützfüße der Dachreling das Gewicht vermindern, jedoch müssen für die Stützen auf Grund der hohen Belastungen beim Fahrbetrieb entsprechende Verstärkungen vorgesehen werden, oder müssen zusätzliche Metallteile mit tragender Funktion umspritzt werden, so dass der Gewichtsvorteil eines Stützfußes aus Kunststoff gegenüber einem herkömmlichen Stützfuß aus Metall weitestgehend aufgezehrt wird. Auch erschwert das Umspritzen das Recycling der Dachreling im Rahmen der Verschrottung des Fahrzeugs.

Der Erfindung liegt die Aufgabe zugrunde, eine Dachreling für Fahrzeuge vorzuschlagen, deren Stützfüße ein einheitliches Aussehen haben und sich bei Verschrottung des Fahrzeuges einfach trennen und dem Recycling zuführen lassen.

Ausgehend von dieser Aufgabenstellung wird bei einer Dachreling für Fahrzeuge der eingangs genannten Art vorgeschlagen, dass die Übergangsfläche des Trägers von unten durch eine Blende abgedeckt ist, die mit einer Lasche in eine entsprechende Öffnung auf der Unterseite des Zapfens eingreift und durch den aufgesteckten Längsholm übergriffen und fixiert wird, während seitliche und zur Anschraubfläche gerichtete Klipsnasen zur Fixierung am Träger und an einer Kappe dienen.

Das Blechpressteil lässt sich leicht und trotzdem als allen Belastungen gewachsenes Bauteil ausbilden und da die einzelnen Elemente lösbar miteinander verbunden, etwa zusammengesteckt oder zusammengeklipst sind, lassen sie sich problemlos trennen, auch wenn sie aus unterschiedlichen Materialien hergestellt werden. Das Blechpressteil weist eine Anschraubfläche, davon im Bogen ansteigend eine Übergangsfläche und an einer Längsseite eine nach oben abgewinkelte Versteifungs- und Stützrippe auf. Der Zapfen ist an seinem einen Ende mit einem Einsteckschlitz für das Ende der Übergangsfläche versehen ist und das andere Ende ist für einen Presssitz im entsprechenden Ende des Längsholms ausgebildet. Zusätzlich können in der Anschraubfläche, der Übergangsfläche und in der Versteifungs- und Stützrippe Verstärkungsrippen eingebracht sein, die das Blechpressteil strukturell verstärken.

Um den Stützfüßen ein einheitliches Aussehen zu erteilen, ist die Übergangsfläche des Trägers von unten durch eine Blende abgedeckt, die mit einer Lasche in eine entsprechende Öffnung auf der Unterseite des Zapfens eingreift und durch den aufgesteckten Längsholm übergriffen und fixiert wird, während seitliche und zur Anschraubfläche gerichtete Klipsnasen zur Fixierung am Träger und an einer Kappe dienen.

Die Kappe kann in Öffnungen des Zapfens einführbare Hakennasen und in ihren Seitenwänden in Sicken oder Taschen des Trägers eingreifende Rastnasen aufweisen, wobei die Hakennasen durch den aufgesteckten Längsholm übergriffen und fixiert werden.

Die Erfindung wird nachstehend anhand eines in der Zeichnung dargestellten Ausführungsbeispiels des Näheren erläutert. In der Zeichnung zeigen:

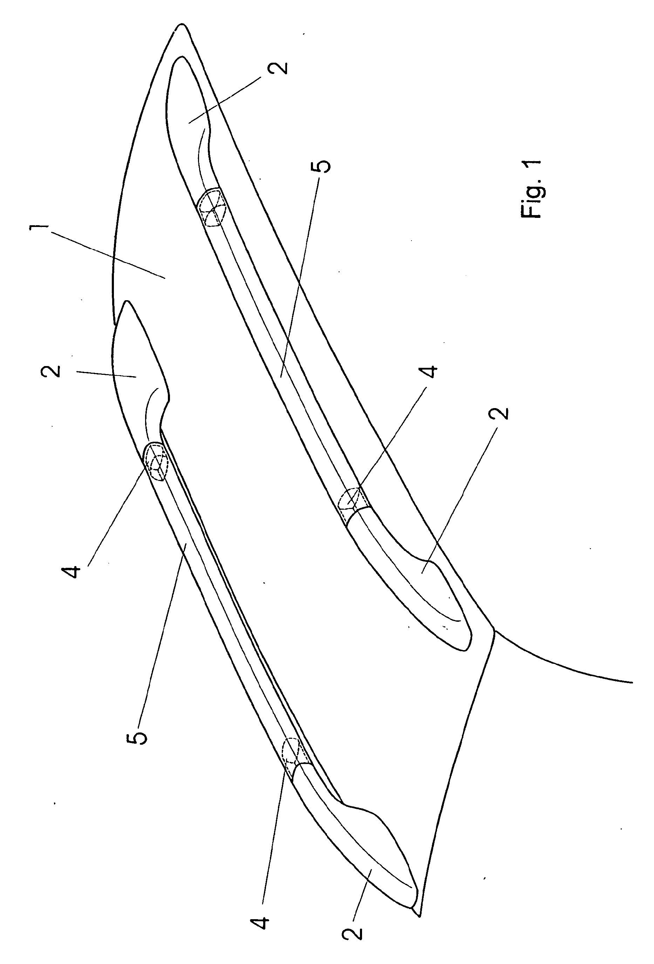

- Fig. 1: eine schematische, perspektivische Darstellung einer auf einem Fahrzeugdach angeordneten Dachreling,
- Fig. 2: eine Explosionsdarstellung der Elemente eines Stützfußes,
- Fig. 3: eine Teilansicht eines Zapfens von unten,
- Fig. 4: eine teilweise Schnittansicht durch einen Stützfuß und
- Fig. 5: eine weitere Schnittansicht durch einen Stützfuß.

Von einem Kraftfahrzeug ist nur ein Fahrzeugdach 1 schematisch dargestellt, auf dem eine Dachreling, bestehend aus Stützfüßen 2 und als Hohlprofile ausgebildete Längsholmen 5, die mittels Zapfen 4 mit den Stützfüßen 2 zusammengesteckt sind, befestigt sind.

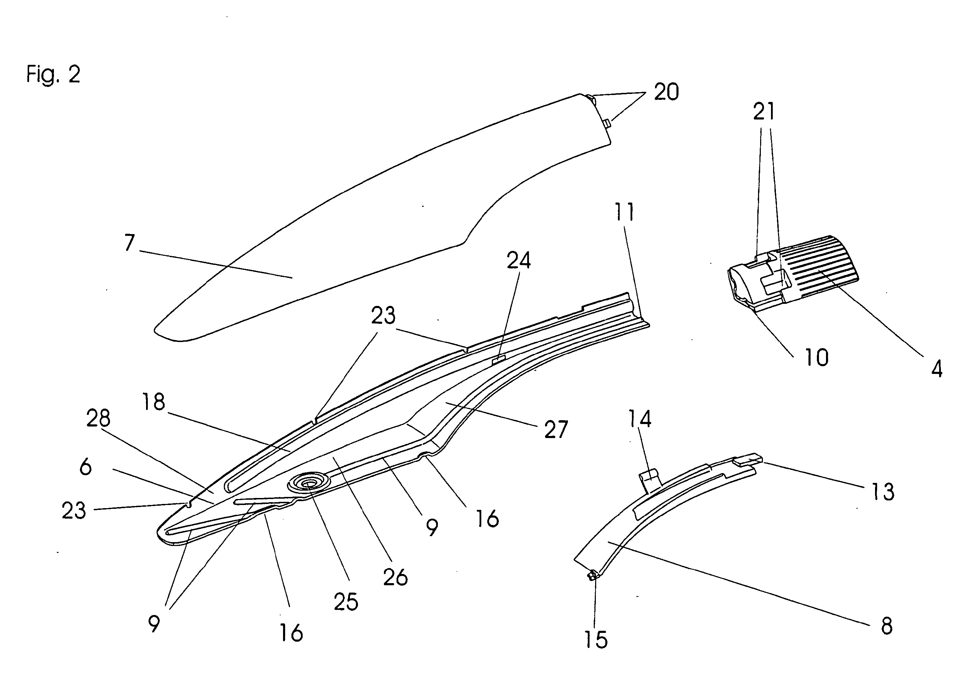

Während die Längsholme 5 keine Besonderheit aufweisen, zeigen die Fig. 2 bis 5 Einzelheiten der Stützfüße.

Jeder Stützfuß besteht aus einem als Blechpressteil ausgebildeten Träger 6, einem daran angesteckten Zapfen 4, einer oberen, stilistisch ausgebildeten Kappe 7 und einer unteren Blende 8. Die lösbare Steckverbindung zwischen Träger 6 und Zapfen 4 vereinfacht das Recycling des Stützfußes 2 im Falle der Verschrottung des Fahrzeugs.

Der Zapfen 4, die Kappe 7 und die Blende 8 sind vorzugsweise als Kunststoffspritzgussteile ausgebildet, können jedoch auch aus Metall, beispielsweise einer Aluminiumlegierung bestehen. Der Träger 6 weist eine Anschraubfläche 26 und davon im Bogen ansteigend eine Übergangsfläche 27 sowie an einer Längsseite eine nach oben abgewinkelte Versteifungs- und Stützrippe 28 auf.

Die Anschraubfläche 26 und die Übergangsfläche 27 sind durch Sicken 9 verstärkt, während in die Versteifungs- und Stützrippe 28 eine Sicke 18 eingeprägt ist. Eingeprägte Taschen 16, Ausschnitte 23 und eine Öffnung 24 dienen zum Befestigen und Abstützen der Kappe 7 und der Blende 8. Durch eine Anschrauböffnung 25 lässt sich eine Schraube zum Befestigen der Dachreling auf dem Fahrzeugdach hindurchführen.

Ein Ende 11 der Übergangsfläche 27 lässt sich in einen entsprechend profilierten Schlitz 10 des Zapfens 4 einführen, wodurch der Zapfen 4 mit dem Träger 6 spielfrei verbunden wird.

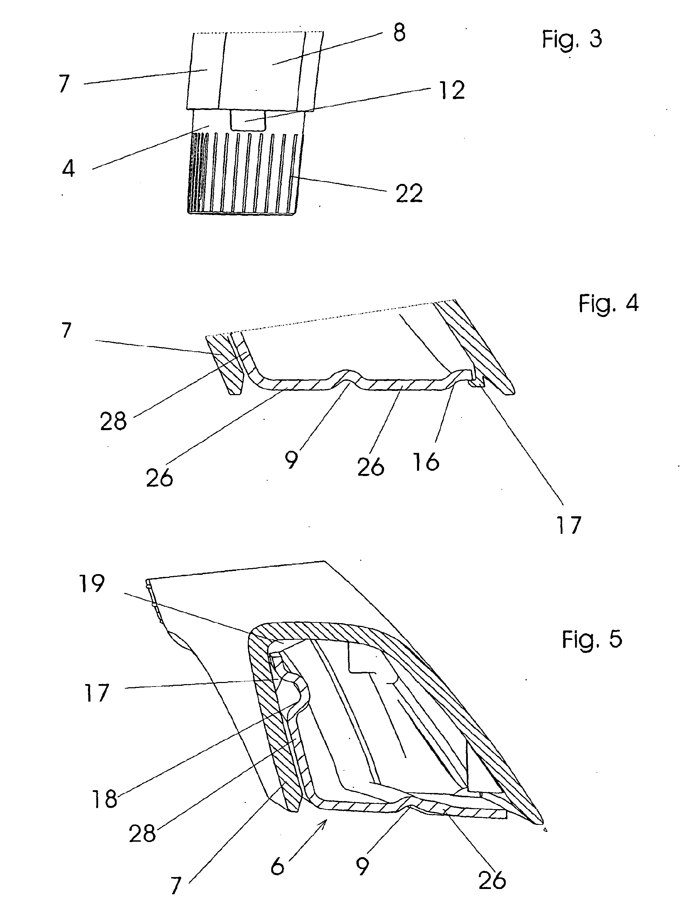

Auf der in Fig. 2 sichtbaren Oberseite des Zapfens 4 sind Öffnungen 21 vorgesehen in die Hakennasen 20 an der Kappe 7 eingreifen. Wie aus Fig. 3 ersichtlich, ist an der Unterseite des Zapfens 4 eine Öffnung 12 angeordnet, in die eine Lasche 13 an der Blende 8 eingreift. Sowohl die Lasche 13 als auch die Hakennasen 20 werden beim Aufschieben eines Längsholmendes auf den Zapfen 4 durch das Längsholmende übergriffen und dadurch in den Öffnungen 12, 21 im Zapfen 4 fixiert. Mit in den Seitenwänden de Kappe 7 angeordneten Rastnasen 17 greift diese einerseits in die Sicke 18 und andererseits unter die Taschen 16, wodurch die Kappe 7 am Träger 6 fixiert wird.

Bevor die Kappe 7 aufgesetzt wird, wird die Blende 8 mit der Lasche 13 in die Öffnung 12 am Zapfen 4 eingeführt und eine Klipsnase 14 wird durch eine Öffnung 24 in der Übergangsfläche 27 hindurchgeführt, während eine Klipsnase 15 in einer Tasche 16 am Träger 6 aufgenommen wird. Um zu verhindern, dass die Kappe 7 bei der Montage über die Klipsposition hinaus nach unten gedrückt wird, weist die Kappe 7 innen Ansätze 19 auf, die auf der Stirnkante der Versteifungs- und Stützrippe 28 im Bereich der Ausschnitte 23 aufsitzen.

Wenn dann die Dachreling mit dem Dach 1 verschraubt ist und anschließend die Kappe 7 aufgeklipst wird, ist ein einheitliches, stilistisches Bild der Dachreling gegeben, die sich durch entsprechende Gestaltung der Längsholme 5 und der Kappen 7 an alle stilistischen Vorgaben anpassen lässt.

Eine einheitliche Oberflächenqualität und ein einheitliches Aussehen der Längsholme 5 und der Stützfüße 2 lässt sich durch Eloxieren erreichen, wenn die Längsholme 5 und die Kappe 7 aus den gleichen, eloxierbaren Leichtmetalllegierungen bestehen. Ist die Kappe 7 aus Kunststoff, lassen sich diese und die aus geeignetem Material bestehende Längsholme 5 verchromen, pulverbeschichten oder lackieren.

Auf diese Weise ist eine Dachreling geschaffen, die optisch mit dem Fahrzeug wie aus einem Guss wirkt, einfach herzustellen ist, ein geringes Gewicht aufweist und daher kostengünstig herstellbar ist, dennoch den im Fahrbetrieb auftretenden, hohen Belastungen gewachsen ist.

## Patentansprüche

1. Dachreling für Fahrzeuge aus zwei sich in einem Abstand und im Wesentlichen parallel zur Dachfläche längs der seitlichen Dachrahmen erstreckenden, als Hohlprofile ausgebildeten Längsholmen (5) und aus die Längsholme (5) tragenden, sich jeweils auf dem Dach (1) oder darin ausgebildeten Kanälen abstützenden Stützfüßen (2), die jeweils einen in die Enden eines Längsholms (5) einsteckbaren Zapfen (4) und einen am Dachblech anschraubbaren Träger (6) aufweisen, wobei der Träger (6) als Blechpressprofil ausgebildet und mit dem Zapfen (4) lösbar verbunden ist, das Blechpressprofil (6) eine Anschraubfläche (26), davon im Bogen ansteigend eine Übergangsfläche (27) und an einer Lärigsseite eine nach oben abgewinkelte Versteifungs- und Stützrippe (28) aufweist, und der Zapfen (4) an seinem einen Ende mit einem Einsteckschlitz (10) für das Ende der Übergangsfläche (27) versehen und sein anderes Ende für das Aufschieben des entsprechenden Endes des Längsholms (5) ausgebildet ist, **dadurch gekennzeichnet, dass** die Übergangsfläche (27) des Trägers (6) von unten durch eine Blende (8) abgedeckt ist, die mit einer Lasche (13) in eine entsprechende Öffnung (12) auf der Unterseite des Zapfens (4) eingreift und durch den aufgesteckten Längsholm (6) übergriffen und fixiert wird, während seitliche und zur Anschraubfläche (26) gerichtete Klipsnasen (14, 15) zur Fixierung am Träger (6) und an einer Kappe (7) dienen.

2. Dachreling für Fahrzeuge nach Anspruch 1, bei der der Zapfen (4) an seinem anderen Ende für einen Presssitz in dem entsprechenden Ende des Längsholms (5) ausgebildet ist.

3. Dachreling für Fahrzeuge nach Anspruch 2, bei der in die Anschraubfläche (26), die Übergangsfläche (27) und in die Versteifungs- und Stützrippe (28) Verstärkungssicken (9, 18) eingebracht sind.

4. Dachreling für Fahrzeuge nach einem der Ansprüche 1 bis 3, bei der die Kappe (7) in Öffnungen (21) des Zapfens (4) einführbare Hakennasen (20) und in ihren Seitenwänden in Sicken (18) und/oder Taschen (16) des Trägers (6) eingreifende Rastnasen (17) aufweist, wobei die Hakennasen (20) durch den aufgesteckten Längsholm (5) übergriffen und fixiert werden.

5. Dachreling für Fahrzeuge nach einem der Ansprüche 1 bis 4, bei der der Zapfen (4), die Kappe (7) und die Blende (8) als Kunststoffspritzgussteile geformt sind und untereinander sowie mit dem Träger (6) und dem Längsholm (5) nur durch Zusammenstecken und Verklipsen verbunden sind.

6. Dachreling nach einem der vorangehenden Ansprüche, **dadurch gekennzeichnet, dass** die Kappe (7) jeweils mit dem Träger (6) verklipsbar ist.

## Claims

1. Roof rack for vehicles, composed of two longitudinal rods (5) designed as hollow profiles and extending essentially parallel to the roof surface along the lateral roof frames, and of supporting feet (2) which carry the longitudinal rods (5) and which are respectively supported on the roof (1) or channels formed therein, which supporting feet in each case have a stud (4) which can be inserted into the ends of a longitudinal rod (5), and a carrier (6) which can be screwed onto the sheet metal of the roof, wherein the carrier (6) is designed as a pressed sheet metal profile and is releasably connected to the stud (4), the pressed sheet metal profile (6) has a screw-attachment surface (26), a transition surface (27) rising therefrom in an arc-shaped manner and, on one longitudinal side, an upwardly angled stiffening and supporting rib (28), and the stud (4) is provided at one end with an insertion slot (10) for the end of the transition surface (27) and at its other end is designed for the pushing-on of the corresponding end of the longitudinal rod (5), **characterised in that** the transition surface (27) of the carrier (6) is covered from below by a screen (8) which by means of a tab (13) engages in a corresponding opening (12) on the underside of the stud (4) and is enclosed and fixed by the pushed-on longitudinal rod (6), while lateral clip-in protrusions (14, 15) oriented towards the screw-attachment surface (28) serve for fixing to the carrier (6) and to a cap (7).

2. Roof rack for vehicles according to claim 1, in which the stud (4) is designed at its other end for a press fit into the corresponding end of the longitudinal rod (5).

3. Roof rack for vehicles according to claim 2, in which reinforcing beads (9, 18) are incorporated in the screw-attachment surface (26), the transition surface (27) and in the stiffening and supporting rib (28).

4. Roof rack for vehicles according to one of claims 1 to 3, in which the cap (7) has hook-in protrusions (20) which can be introduced into openings (21) of the stud (4) and in its side walls has latching protrusions (17) which engage in beads (18) and/or pockets (16) of the carrier (6), wherein the hook-in protrusions (20) are enclosed and fixed by the pushed-on longitudinal rod (5).

5. Roof rack for vehicles according to one of claims 1 to 4, in which the stud (4), the cap (7) and the screen (8) are formed as injection-moulded plastic parts and are connected to one another and also to the carrier (6) and the longitudinal rod (5) only by being pushed together and clipped.

6. Roof rack according to one of the preceding claims, **characterised in that** the cap (7) can in each case be clipped onto the carrier (6).

## Revendications

1. Galerie de toit pour véhicule, constituée de deux longerons (5) en profilé creux s'étendant avec un intervalle parallèlement à la surface du toit le long des cadres de toit latéraux, et de pieds de support (2) porteurs des longerons (5), s'appuyant chacun sur le toit (1) ou dans des canaux formés dans celui-ci, qui présentent chacun un tenon (4) pouvant être enfilé dans les extrémités d'un longeron (5) et un support (6) pouvant être vissé sur la tôle du toit, le support (6) étant constitué d'un profilé en tôle emboutie et étant relié de façon amovible au tenon (4), le profilé en tôle emboutie (6) présentant une surface de vissage (26), une surface de transition (27) s'élevant en arc à partir de celle-ci et une nervure de raidissement ou d'appui (28) pliée vers le haut, et le tenon (4) étant pourvu à l'une de ses extrémités d'une fente d'enfoncement (10) pour l'extrémité de la surface de transition (27) et étant configuré à son autre extrémité pour l'enfilement dans l'extrémité correspondante du longeron (5), **caractérisé en ce que** la surface de transition (27) du support (6) est recouverte par dessous par un panneau (8), qui pénètre par une languette (13) dans une ouverture correspondante (12) sur la face inférieure du tenon (4) et est surmontée et bloquée par le longeron (6) monté dessus, tandis que des becs de clipsage (14, 15) latéraux et dirigés vers la surface de vissage (26) servent à la fixation sur le support (6) et sur un cache (7).

2. Galerie de toit pour véhicule selon la revendication 1, dans laquelle le tenon (4) est configuré à son autre extrémité pour se loger sous contrainte dans l'extrémité correspondante du longeron (5).

3. Galerie de toit pour véhicule selon la revendication 2, dans laquelle des moulures de renfort (9, 18) sont installés dans la surface de transition (27) et dans les nervures de raidissement ou d'appui (28).

4. Galerie de toit pour véhicule selon l'une des revendications 1 à 3, dans laquelle le cache (7) présente des becs d'accrochage (20) pouvant être introduits dans des ouvertures (21) du tenon (4) et des becs de clipsage (17) pénétrant dans sa face latérale dans des moulures de renfort (18) et/ou des poches (16) du support (6), les becs d'accrochage (20) étant recouverts et fixés par le longeron (5) mis en place.

5. Galerie de toit pour véhicule selon l'une des revendications 1 à 4, dans laquelle le tenon (4), le cache (7) et le panneau (8) sont des pièces en matière plastique moulée par injection et ne sont reliés entre eux ainsi qu'avec le support (6) et le longeron (5) que par accrochage et clipsage.

6. Galerie de toit pour véhicule selon l'une des revendications précédentes, dans laquelle le cache (7) peut chaque fois être clipsé avec le support (6).
